# FASCICULE DE BREVET EUROPEEN

(11) **EP 2 845 243 B1**
(45) Date de publication et mention de la délivrance du brevet: **05.04.2017**
(21) Numéro de dépôt: 13719753.9
(22) Date de dépôt: 05.04.2013
(51) Int. Cl.: H01M 2/10, H01G 11/08, H01G 11/14, H01G 11/82, H01M 10/653, H01M 10/643, H01M 10/6554, H01M 10/613

(54) **MODULE DE STOCKAGE D'ÉNERGIE CONTENANT UNE PLURALITÉ D'ÉLÉMENTS DE STOCKAGE D'ÉNERGIE ET DES MOYENS DE DISSIPATION THERMIQUE PERFECTIONNÉS ET PROCÉDÉ D'ASSEMBLAGE**
ENERGIESPEICHERMODUL MIT MEHREREN ENERGIESPEICHERELEMENTEN UND VERBESSERTEN MITTELN ZUR WÄRMEABLEITUNG SOWIE VERFAHREN ZUR ANORDNUNG
ENERGY STORAGE MODULE CONTAINING A PLURALITY OF ENERGY STORAGE ELEMENTS AND IMPROVED MEANS OF THERMAL DISSIPATION AND METHOD OF ASSEMBLY

(30) Priorité: 30.04.2012 FR 1253980
(43) Date de publication de la demande: 11.03.2015
(73) Titulaire: Blue Solutions, 29500 Ergué Gabéric (FR)
(72) Inventeur: LE-GALL, Laurent, F-29500 Ergué-Gabéric (FR); JUVENTIN, Anne-Claire, F-29000 Quimper (FR)
(74) Mandataire: Regimbeau
(86) Numéro de dépôt international: PCT/EP2013/057265
(87) Numéro de publication internationale: WO 2013/164157

(56) Documents cités:
- EP-A1- 0 989 618
- DE-A1-102007 063 186
- DE-A1-102008 034 862

## Description

La présente invention a pour objet un module de stockage d'énergie électrique comprenant une pluralité d'éléments de stockage d'énergie.

De tels éléments de stockage d'énergie peuvent constituer un condensateur, une batterie, une supercapacité, etc. Chacun de ces éléments comprend généralement un coeur électrochimique stockant l'énergie et comprenant au moins une électrode positive et une électrode négative, et un boîtier externe rigide protégeant mécaniquement le coeur électrochimique. Le coeur électrochimique est relié au boîtier de sorte qu'une borne positive et une borne négative de l'élément de stockage sont accessibles depuis l'extérieur de celui-ci.

Un module est un ensemble comprenant une pluralité d'éléments de stockage d'énergie disposés côte à côte et reliés électriquement, généralement en série. Il permet de fournir en un seul bloc des ensembles d'éléments de stockage d'énergie supportant une tension plus importante et fournissant une capacité de stockage plus importante que des éléments unitaires. En plus de contenir les éléments de stockage, il comprend généralement de nombreux éléments fonctionnels (isolation électrique, conduction thermique, équilibrage de la charge des éléments de stockage, etc.) qui permettent d'assurer un bon fonctionnement du module.

On connaît déjà dans l'état de la technique un module de stockage d'énergie comprenant une pluralité d'éléments de stockage d'énergie disposés côte à côte. Ce module comprend une enveloppe externe parallélépipédique constituée de six parois indépendantes fixées les unes aux autres lors de l'assemblage du module. Il comprend également un tapis de conduction thermique sur lequel sont posés les éléments de stockage, un tel tapis permettant de conduire la chaleur depuis les éléments vers l'extérieur du module. Une des parois, notamment la paroi inférieure du module peut également comprendre des ailettes de refroidissement pour permettre une meilleure évacuation de la chaleur vers l'extérieur du module.

Un tel module est satisfaisant pour la plupart des applications. Toutefois, pour certaines applications on cherche toujours à augmenter la capacité volumique du module. Or, l'augmentation de la capacité volumique induit l'augmentation de la chaleur produite, et peut entraîner une mauvaise évacuation de la chaleur ou, pour remédier à cet inconvénient, l'ajout d'un volume consacré aux ailettes d'évacuation de la chaleur qui ne permet pas d'augmenter de façon significative la capacité volumique du module.

On connaît d'après le document EP 0 989 618 un module de stockage d'une pluralité de batteries comprenant une enveloppe à l'intérieur de laquelle sont stockées plusieurs batteries empilées. Le module comprend également une plaque de compression et des moyens (boulons ou ressorts) destinés à exercer une pression sur cette plaque pour comprimer l'empilement de batteries.

On connaît enfin d'après le document DE 10 2007 063 186 un module de stockage de batteries comprenant une structure de calage en matériau isolant.

Aucun de ces documents ne décrit, ni ne suggère les caractéristiques mentionnées dans la partie caractérisante de la revendication 1.

Pour remédier aux inconvénients précités, l'invention a pour objet un module de stockage d'énergie selon la revendication 1 apte à contenir une pluralité d'éléments de stockage d'énergie, le module comprenant :
- une enveloppe comprenant au moins une pluralité de parois latérales et deux parois d'extrémité, l'enveloppe étant dimensionnée pour entourer les éléments de stockage d'énergie,
- au moins un organe de mise en contact réalisé au moins partiellement en un matériau thermiquement conducteur, destiné à être placé entre au moins un élément de stockage d'énergie et une paroi latérale du module, dite paroi de référence, ledit organe comprenant une première face de contact et une deuxième face de contact associées respectivement avec la paroi de référence et ledit ou lesdits éléments de stockage d'énergie, l'une au moins desdites première et deuxième faces de contact étant adaptée pour venir en butée contre l'un de la paroi de référence ou dudit ou desdits éléments, et ledit organe étant configuré de sorte que la distance entre les première et deuxième faces de contact puisse varier.

Par « qui vient en butée contre », on entend que l'élément de stockage ou la paroi de référence maintient l'organe dans sa position, et sont susceptibles de déterminer ensemble la distance entre les première et deuxième faces de contact. L'organe peut par exemple être en contact direct avec l'élément et/ou la paroi de référence. Une pièce non rigide (tel qu'un tapis ou une feuille isolante) peut aussi être inséré entre l'organe de mise en contact et la paroi de référence ou l'élément de stockage. On ne considère pas que l'organe vient en butée contre une telle pièce non rigide car cette dernière n'est pas susceptible d'influer sur la position de l'une ou l'autre des faces de contact et/ou la distance entre les deux faces de contact.

La caractéristique précitée selon laquelle « l'une au moins desdites première et deuxième faces de contact est adaptée pour venir en butée contre l'un de la paroi de référence ou dudit ou desdits éléments et ledit organe est configuré de sorte que la distance entre les première et deuxième faces de contact puisse varier » peut également être exprimée sous la forme suivante: « ledit organe comprend une première face de contact, une deuxième face de contact et au moins une composante élastiquement déformable entre la première face de contact et la deuxième face de contact, la paroi de référence et ledit ou lesdits éléments étant adaptés pour solliciter respectivement la première face et la deuxième face de contact de sorte que la distance entre la première face de contact et la deuxième face de contact varie par déformation de la composante élastiquement déformable ».

Ainsi, grâce à l'invention, on peut évacuer la chaleur par plusieurs voies vers l'enveloppe du module, à savoir non seulement par la voie classique (paroi contre laquelle sont plaqués les éléments, notamment la paroi inférieure du module) mais également par l'intermédiaire de l'organe et de la paroi de référence de l'enveloppe.

Le fait que la distance entre la première et la deuxième paroi de l'organe de mise en contact est variable permet de s'assurer que les éléments sont bien plaqués contre la paroi de référence dans tous les modules, quelles que soient les tolérances de fabrication des différentes pièces du module, notamment de l'enveloppe.

On peut donc augmenter la chaleur évacuée au niveau de l'enveloppe grâce à l'organe de mise en contact sans ajouter d'ailettes sur celle-ci. On notera toutefois que l'invention n'exclut pas la protection d'un module tel que défini ci-dessus et dont l'enveloppe est munie d'ailettes. Ces ailettes ne sont simplement pas nécessaires du fait de la configuration de l'enveloppe.

Dans un mode de réalisation particulièrement préférentiel, les parois latérales de l'enveloppe sont réalisées en une seule pièce présentant un contour fermé et étant dimensionnée pour entourer les éléments de stockage d'énergie

L'enveloppe comprenant plusieurs parois d'un seul tenant permet en effet une meilleure circulation de la chaleur au sein de l'enveloppe que dans l'état de la technique puisqu'il n'y a pas de discontinuité de matière entre deux parois adjacentes. La chaleur est alors mieux répartie entre les différentes parois de l'enveloppe et la surface d'échange de l'enveloppe avec l'air est plus importante.

L'organe de mise en contact, de hauteur variable, permet alors de glisser facilement les éléments dans l'enveloppe en minimisant la hauteur de l'organe, tout en plaquant ces éléments contre une paroi de l'enveloppe pour permettre une aussi bonne évacuation de la chaleur depuis les éléments vers l'enveloppe du module (en augmentant la hauteur de l'organe une fois les éléments insérés dans le module).

En effet, lors de l'insertion des éléments dans l'enveloppe, l'organe de mise en contact est configuré de sorte que sa hauteur soit inférieure à la hauteur entre les éléments et la paroi latérale, et il n'y a pas encore de contact intime des éléments avec les parois de l'enveloppe. On peut donc facilement insérer par glissement les éléments et les disposer de la meilleure façon dans l'enveloppe. Ensuite, on fait varier la hauteur entre les faces de contact de l'organe de façon à plaquer les éléments contre la paroi de l'enveloppe apte à dissiper la chaleur et la paroi de référence par l'intermédiaire de l'organe, afin d'optimiser cette évacuation.

Selon l'invention la variation de hauteur précitée de l'organe de mise en contact est opérée automatiquement, lors de l'insertion dans l'enveloppe, lorsqu'un élément de commande de variation de cette hauteur entre en contact avec une paroi de l'enveloppe.

On notera en outre que le module selon l'invention présente d'autres avantages, notamment :
- la paroi d'évacuation de la chaleur (celle contre laquelle sont plaqués les éléments, éventuellement par l'intermédiaire d'un tapis thermique) n'est plus obligatoirement la paroi inférieure du module, paroi contre laquelle les éléments étaient en contact intime du fait de la gravité (puisque l'on est apte à plaquer les éléments facilement contre n'importe quelle paroi du module sans rendre le procédé d'assemblage du module trop complexe, car l'enveloppe est constituée d'un seul tenant). De cette façon, on dispose de plus de flexibilité dans le choix de la paroi d'évacuation de la chaleur, et on peut choisir la paroi la plus adaptée en fonction des organes entourant le module (par exemple, paroi la plus proche d'un élément de refroidissement ou plus éloignée d'un autre organe dégageant de la chaleur),
- en disposant d'une enveloppe déjà partiellement formée (plusieurs parois réalisées en une seule pièce), on simplifie le procédé d'assemblage du module, en évitant un positionnement relatif complexe des parois de ladite enveloppe les unes par rapport aux autres. De plus, le fait que l'enveloppe comprenne moins de pièces que dans l'état de la technique permet de s'affranchir de nombreux problèmes, comme les problèmes d'étanchéité entre les différentes pièces de l'enveloppe. On peut donc simplifier le procédé d'assemblage du module et diminuer les coûts associés à la fabrication de celui-ci.

On va maintenant décrire l'invention en référence aux figures annexées, montrant des modes de réalisation de l'invention et nullement limitatives, dans lesquelles :
- la figure 1 est une vue en éclaté d'un module de stockage d'énergie selon un mode de réalisation de l'invention,
- la figure 2 est une vue en perspective d'un organe de mise en contact appartenant au module de la figure 1,
- la figure 3 est une vue en perspective d'un coeur de module du module de la figure 1,
- la figure 4 est une vue en perspective d'une structure de calage du coeur de module de la figure 1,
- la figure 5 est une vue de côté, selon une coupe A-A, d'une moitié du coeur de module et de l'organe de mise en contact une fois pré-montés,
- la figure 6 est une vue en perspective d'un organe de mise en contact selon un deuxième mode de réalisation de l'invention,
- la figure 7 est une vue en coupe transversale de l'organe de la figure 6, dans une configuration d'assemblage (en traits pleins) et une configuration de fonctionnement (en pointillés),
- les figures 8A et 8B sont des vues de côté d'un module selon un troisième mode de réalisation de l'invention, à différentes étapes du procédé d'assemblage du module,
- la figure 9 est une vue en coupe en perspective d'un détail du module des figures 8A et 8B.

Comme indiqué plus haut, le module 10; 100 selon l'invention est apte à contenir une pluralité d'éléments 14 ; 114 de stockage d'énergie, et comprend :
- une enveloppe 16; 116 comprenant au moins une pluralité de parois latérales et deux parois d'extrémité 18A; 18B, et dimensionnée pour entourer les éléments de stockage d'énergie,
- au moins un organe de mise en contact 22 ; 80; 122 destiné à être inséré entre au moins un élément de stockage d'énergie et une paroi latérale du module, dite paroi de référence 20A; 120A, ledit organe comprenant une première face de contact 24A; 86A ; 126A qui vient en butée contre la paroi de référence 20A ; 120A et une deuxième face de contact 30A; 84A; 124A qui vient en butée contre ledit ou lesdits éléments 14; 114, et étant configuré de sorte que la distance entre les première et deuxième faces de contact puisse varier.

Le module selon l'invention peut également comprendre l'une ou plusieurs caractéristiques de la liste ci-dessous :
- les parois latérales de l'enveloppe sont réalisées en une seule pièce 20 ; 120 présentant un contour fermé et étant dimensionnée pour entourer les éléments de stockage d'énergie,
- la pièce 20 comprenant les parois latérales est ouverte à chacune de ses deux extrémités, le module comprenant en outre deux parois d'extrémité 18A-18B indépendantes de la pièce et aptes à venir fermer celle-ci à ses deux extrémités ouvertes. La pièce est ainsi de forme tubulaire et peut être fabriquée en continu. Elle peut également être extrudée. Cela permet de limiter encore les coûts de fabrication du module. Alternativement, la pièce peut intégrer l'une des parois d'extrémité de l'enveloppe et n'être ouverte qu'à une extrémité pour y glisser les éléments de stockage. On diminue alors le nombre d'étapes d'assemblage mais la pièce est plus complexe à fabriquer,
- l'enveloppe 16; 116 présente une forme parallélépipédique, la pièce 20 comprenant quatre parois latérales. Cette configuration est en effet la configuration optimale en termes d'encombrement du module,
- le ou au moins l'un des organes de mise en contact 22 ; 80; 122 est configuré pour pouvoir se déformer élastiquement au moins selon la direction normale aux faces de contact. Cette élasticité est de préférence inhérente à la pièce, du fait de sa conception ou est présente du fait d'éléments rapportés tels que des ressorts. Grâce à un tel organe, on fait varier la distance entre les faces de contact de façon simple et efficace puisque cette distance peut prendre une infinité de valeurs. Cela permet donc également de prendre en compte les tolérances de fabrication des éléments du module,
- dans un mode de réalisation particulier, le ou au moins l'un des organes de mise en contact 22 comprend une paroi principale 24 formant la première face de contact 24A ou la deuxième face de contact, et au moins une languette 26 comprenant un bras incliné 28 relativement à la paroi principale et, à l'extrémité du bras, une portion 30 formant la première ou la deuxième face de contact 30A. Ce mode de réalisation est avantageux car l'élasticité est donnée par la forme de l'organe qui peut donc être réalisé en une seule pièce,
- le ou au moins l'un des organes de mise en contact 22 est configuré pour comprendre une pluralité de deuxièmes faces de contact 30A, chacune étant destinée à venir en butée contre un élément de stockage distinct 14, ledit ou lesdits organes étant configurés, notamment étant aptes à se déformer au moins selon la direction normale aux faces de contact, de sorte que les distances entre la première face de contact 24A et chacune des deuxièmes faces de contact 30A puissent être indépendantes les unes des autres. Dans un mode de réalisation particulièrement avantageux, le ou au moins l'un des organes de mise en contact 22 comprend une pluralité de languettes 26, chaque languette étant apte à être mise en place au droit d'un élément de stockage d'énergie 14. En effet, dans ce cas, l'organe de mise en contact, qui gère le plaquage contre l'enveloppe de chacun des éléments de stockage de façon individuelle et indépendante des autres, permet de tenir compte des légères différences de hauteur entre les éléments, dues aux tolérances de fabrication des éléments. Cet effet peut également bien entendu être atteint à l'aide d'autres conceptions que celles détaillées ici, par exemple si l'organe présente des deuxièmes faces de contact, qui ne sont pas directement reliées les unes aux autres et reliées chacune à la première face de contact par un ressort,
- le ou au moins l'un des organes de mise en contact 22 comprend des moyens 34, 35 pour maintenir ledit organe 22 dans une position contrainte. On assure ainsi une meilleure insertion de l'organe 22 dans l'enveloppe 16, sans intervention extérieure. La hauteur de l'organe dans sa position contrainte peut en effet être choisie de sorte qu'il subsiste un espace entre l'organe et la paroi de référence lorsque celui-ci est inséré dans l'enveloppe et au contact du ou des éléments de stockage correspondants. Dans un mode de réalisation particulier, les moyens de maintien comprennent des moyens mécaniques 34, 35 tels qu'une ou plusieurs nervures, destinés à coopérer avec des moyens complémentaires 70 solidaires d'au moins un élément de stockage, afin d'activer ou de désactiver les moyens de maintien 34, 35. L'organe est ainsi inséré avec les éléments et sa position contrainte peut être activée ou désactivée par coopération avec des moyens 70 solidaires des éléments, ce qui permet de le faire passer d'une position d'assemblage dans lequel il présente une première hauteur et peut facilement être inséré dans l'enveloppe, à une position de fonctionnement, dans lequel il présente une deuxième hauteur plus importante pour être en contact avec la paroi de l'enveloppe et les éléments,
- le module comprend au moins un élément 36; 38 électriquement isolant, destiné à être placé entre le ou au moins l'un des organes de mise en contact et le ou au moins l'un des éléments de stockage 14 et/ou entre le ou au moins l'un des éléments de stockage et une paroi latérale de l'enveloppe 16 opposée à la paroi de référence. De préférence, un tel élément est placé au-dessus et en-dessous du coeur de module. Cet ou au moins l'un des éléments électriquement isolant peut également être compressible, ce qui permet de rattraper les différences de hauteur entre les différents éléments de stockage. On notera que cet élément est de préférence également thermiquement conducteur pour permettre la bonne transmission de la chaleur à l'enveloppe,
- la paroi 120B de l'enveloppe opposée à la paroi de référence 120A est configurée de sorte que sa distance relativement à la paroi de référence varie localement. Elle peut par exemple comprendre des ondulations 121. La paroi est configurée de sorte que l'écart de distance ne dépasse pas 1 cm, notamment 5 mm. Une telle configuration permet de plaquer tous les éléments de stockage contre la paroi, même ceux de plus petite hauteur, sans pour autant endommager le tapis thermique 136 éventuellement placé entre la paroi et ces éléments afin d'être compressé pour mieux gérer ces jeux. En effet, lorsque la paroi 120B n'est pas plane et qu'un élément 114 ayant une grande hauteur est placé dans l'enveloppe, le tapis thermique est très compressé. Lorsque la distance varie entre la paroi de référence 120A et la paroi opposée 120B, il existe des zones (les zones les plus éloignées de la paroi de référence, qui ne seront pas en contact avec les éléments) qui peuvent permettre de laisser de l'espace au tapis thermique 36 pour que ce dernier se déforme. Alternativement, l'organe peut être configuré pour comprendre des évidements, notamment présenter une configuration en créneaux, pour permettre sa déformation dans ces zones évidées. Ce type de configuration est particulièrement adapté aux cas où l'organe de mise en contact ne permet pas d'adapter le réglage de hauteur de l'organe de mise en contact à chaque élément,
- le module comprend une seule paroi de référence 20A, 120A constituée par la paroi inférieure ou la paroi supérieure de l'enveloppe 16, 116 constituant des surfaces d'évacuation plus importantes, qui sont qui plus est en contact avec tous les éléments. Le module pourrait toutefois également comprendre le cas échéant plusieurs parois de référence ou une paroi de référence qui serait verticale une fois le module mis en place dans son environnement,
- le module comprend une structure de calage 50; 150 d'au moins deux éléments de stockage 14; 114, réalisée en un matériau isolant électriquement, notamment en matière plastique, et comprenant une pluralité de logements 52 pour accueillir au moins un élément de stockage d'énergie 14, 114. Une telle structure 50, 150 permet de caler les éléments les uns relativement aux autres et de les isoler électriquement les uns par rapport aux autres. Dans le procédé selon l'invention, le placement des éléments de stockage 14, 114 étant effectué par glissement, une telle structure est particulièrement avantageuse, puisqu'elle permet de déterminer et tenir la position relative des éléments de stockage d'énergie avant l'insertion des éléments dans l'enveloppe et dispense donc un opérateur d'effectuer des ajustements complexes, à l'aveugle. De plus, une telle structure offre un cadre pour permettre la mise en place de façon automatisée des éléments de stockage dans celle-ci,
- la structure de calage 50 comprend au moins l'un des moyens suivants :
   - des moyens de coopération 70, 151 avec les moyens mécaniques 34, 35 ; 130 de ou d'au moins l'un des organes de mise en contact,
   - des moyens 58 de guidage de câbles 60, et/ou
   - des moyens 56 pour loger une connexion électrique apte à coopérer avec des moyens de connexion complémentaires reliés aux éléments de stockage, et/ou
   - des moyens 68 pour loger une connexion électrique à une carte électronique, et/ou
   - des moyens 66 de fixation mécanique de la carte électronique, et/ou
   - des moyens de fixation mécanique d'au moins un capteur.

   On profite de l'existence de la structure pour simplifier encore le procédé de fabrication du module en intégrant des fonctions sur celle-ci. On assemble notamment toute la connectique sur la structure avant de placer les éléments sur celle-ci, ce qui permet de préparer les structures hors de la chaîne de montage principale et de diminuer encore les coûts du procédé de fabrication du module.

L'invention a également pour objet un procédé d'assemblage d'un module 10; 100 de stockage d'énergie selon la revendication 16 destiné à contenir une pluralité d'éléments de stockage d'énergie 14; 114 dans une enveloppe 16, comprenant les étapes suivantes :
- insertion par glissement d'au moins un élément de stockage d'énergie 14 ; 114 et d'un organe de mise en contact 22 ; 80 ; 122 comprenant une première face de contact 24A; 86A; 126A et une deuxième 30A ; 84A ; 124A face de contact et configuré pour que la distance entre les première et deuxième faces de contact puisse varier, dans une pièce 20 ; 120 de l'enveloppe 16 ; 116 présentant un contour fermé et dimensionnée pour entourer l'élément de stockage d'énergie, l'insertion étant effectuée de sorte que la deuxième face de contact 30A; 84A; 124A de l'organe vienne en butée contre le ou au moins l'un des éléments et que la distance entre les faces de contact soit égale à une première distance,
- modification de la configuration de l'organe de mise en contact 22 ; 80; 122 de sorte que la distance entre les première et deuxième faces de contact soit égale à une deuxième distance supérieure à la première et que la première face de contact 24A; 86A; 126A vienne en butée contre une paroi, dite de référence 20A ; 120A, de la pièce de l'enveloppe.

On notera que l'organe et les éléments de stockage peuvent être insérés simultanément ou séparément, en fonction des modes de réalisation, dans l'enveloppe.

Le procédé selon l'invention peut également comprendre l'une ou plusieurs des caractéristiques listées ci-dessous :
- le procédé comprend une étape d'insertion d'au moins deux éléments de stockage 14; 114 dans une structure de calage 50; 150 comprenant une pluralité de logements 52 aptes respectivement à accueillir au moins l'un des éléments de stockage, préalablement à l'étape de solidarisation de l'élément de stockage et de l'organe de mise en contact. Les moyens mécaniques coopérant avec l'organe peuvent être placés sur la structure de calage,
- le procédé comprend, avant l'étape de positionnement de la structure de calage, notamment d'insertion des éléments 14 dans la structure de calage 50, une étape d'assemblage d'éléments de connectique électronique, notamment au moins un câble 60, au moins une carte électronique, au moins un connecteur, au moins un capteur, sur la structure de calage 50.

On va maintenant décrire plus particulièrement le module 10 représenté sur les figures.

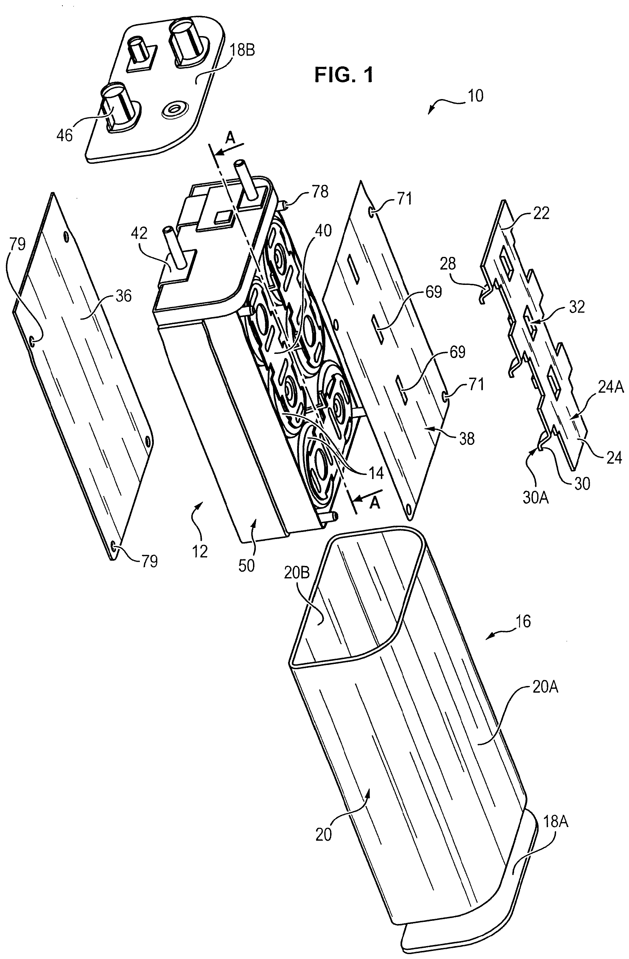

Comme on le voit sur la figure 1, le module 10 comprend tout d'abord un coeur de module 12 comprenant six éléments de stockage d'énergie 14 et que l'on décrira plus en détails par la suite.

Il comprend également une enveloppe 16 de forme essentiellement parallélépipédique et comprenant six parois. Cette enveloppe est réalisée en trois parties : une première paroi d'extrémité 18A, une deuxième paroi d'extrémité 18B et une pièce 20 comprenant toutes les parois latérales du module. Cette pièce est de forme tubulaire. Elle présente un contour fermé et est bien entendu dimensionnée pour accueillir le coeur de module 12 et notamment les éléments 14 et entourer ces derniers. L'enveloppe est généralement réalisée en un matériau thermiquement conducteur, par exemple un matériau métallique.

Le module comprend également un organe de mise en contact 22 destiné à s'intercaler entre la paroi supérieure 20A de la pièce 20, également appelée paroi de référence, et le coeur de module 12.

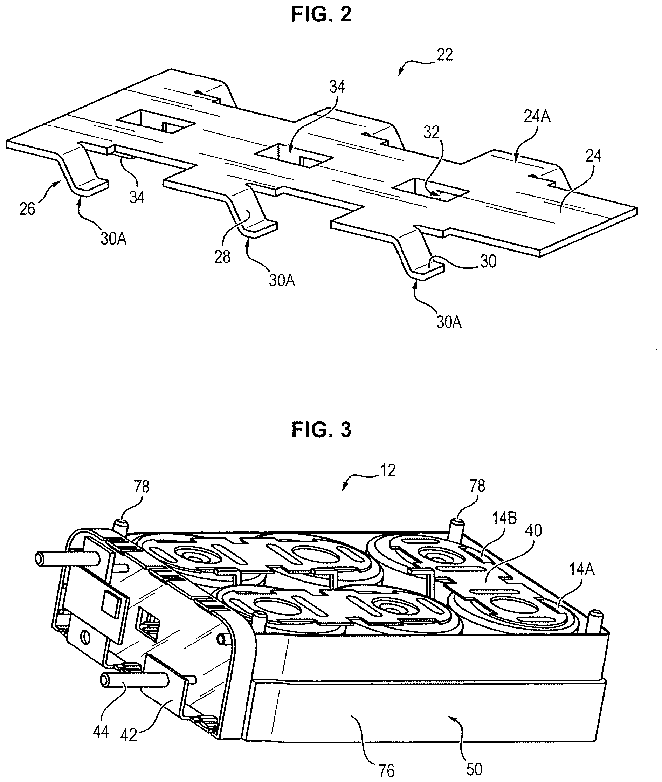

Comme on le voit mieux à la figure 2, sur laquelle l'organe est représenté en perspective, celui-ci comprend une paroi principale 24 globalement plane dont la face supérieure forme une première face de contact 24A destinée à venir en butée contre la paroi supérieure 20A de la pièce 20. L'organe 22 comprend également six languettes 26 en saillie de la paroi principale et réparties sur l'organe pour venir chacune en regard d'un élément de stockage d'énergie 14 lorsque l'organe 22 est mis en place dans le module. L'organe 22 comprend plus particulièrement deux rangées de trois languettes.

Chaque languette 26 comprend plus particulièrement un bras incliné 28 relativement à la paroi principale et, à l'extrémité libre du bras, une paroi d'extrémité 30 essentiellement parallèle à la paroi principale et dont la face inférieure forme une deuxième face de contact 30A destinée à venir en butée contre l'un des éléments.

L'organe comprend également en partie centrale de la paroi principale, entre les deux rangées de languettes, des évidements 32. Des ponts de matières 34, s'étendent en saillie de la paroi principale autour des évidements, du même côté de la paroi principale que les languettes. Ces ponts de matière relient trois bords de chaque évidement 32, dont les deux bords longeant les rangées de languettes. Ils portent une lame 35 parallèle à la paroi principale 24. On expliquera mieux par la suite la structure et la fonction de cette lame 35.

L'organe 22 est réalisé en matériau thermiquement conducteur par exemple en métal tel que l'acier ou le laiton, pour transmettre la chaleur depuis les éléments 14 vers l'enveloppe 16. Il est configuré de sorte que la distance entre les première et deuxième faces de contact puisse varier. En effet, du fait de l'élasticité intrinsèque à chaque languette, la position de la paroi d'extrémité 30 relativement à la paroi principale 24 peut varier en fonction des contraintes extérieures subies par la languette 26.

Le module comprend également un tapis thermique 36 destiné à être intercalé entre l'extrémité inférieure du coeur de module 12 et la paroi inférieure 20B de la pièce 20. Ce tapis thermique est réalisé en un matériau électriquement isolant et thermiquement conducteur, tel que l'EPDM (éthylène-polypropylène-diène monomère). Ce matériau est également élastiquement déformable. La chaleur peut donc être évacuée depuis les éléments vers la paroi 20B.

Il comprend également une feuille d'isolation 38 électriquement isolante et thermiquement conductrice destinée à être intercalée entre la face supérieure du coeur de module 12 et l'organe de mise en contact 22. Cette feuille comprend généralement des évidements 69 qui permettent la coopération mécanique du coeur de module et de l'organe 22 par l'intermédiaire de nervures 70 telles que détaillées ci-après ainsi que des évidements 71 pour le positionnement de la feuille relativement au coeur de module, coopérant avec des doigts 78 prévus à cet effet sur ledit coeur. Ces évidements ne sont toutefois pas situés au droit des éléments pour éviter tout court-circuit entre deux éléments 14, 114.

On minimise ainsi les fuites de courant qui pourraient se produire depuis le coeur de module jusqu'à l'enveloppe.

On va maintenant décrire plus spécifiquement le coeur de module 12, à l'aide des figures 3 à 5. Ce coeur de module, comprend six éléments de stockage d'énergie 14, chaque élément présentant de façon classique une forme essentiellement cylindrique et comprenant un boîtier tubulaire 14A avec un fond, ce fond formant une première borne électrique (par exemple une borne positive) de l'élément, et un couvercle 14B, isolé électriquement du boîtier 14A, par exemple par un joint électriquement isolant inséré entre ces deux pièces. Le couvercle forme une deuxième borne électrique de l'élément, par exemple une borne négative. Il comprend une paroi d'extrémité et un rebord cylindrique 15 couvrant partiellement la paroi latérale du boîtier 14A, le diamètre de ce rebord 15 étant supérieur au diamètre de la paroi latérale 14A.

Les éléments 14 sont reliés électriquement en série à l'aide de barrettes de connexion 40 réalisées en un matériau électriquement et thermiquement conducteur, notamment métallique. Ces barrettes 40 relient chacune une première borne d'un élément 14 donné à une deuxième borne d'un élément 14 adjacent. Chaque élément 14 est relié à un élément adjacent différent à chacune de ses bornes. Le coeur de module 12 comprend également des barrettes 42 ne reliant l'élément sur lequel elles sont fixées (il s'agit là des éléments placés en extrémité de l'agencement série des éléments) à aucun autre élément. Ces barrettes sont reliées par des connecteurs 44 aux bornes 46 du module, ménagées ici sur la paroi 18B de l'enveloppe et représentées sur la figure 1, par lesquelles le module est relié aux éléments électriques extérieurs.

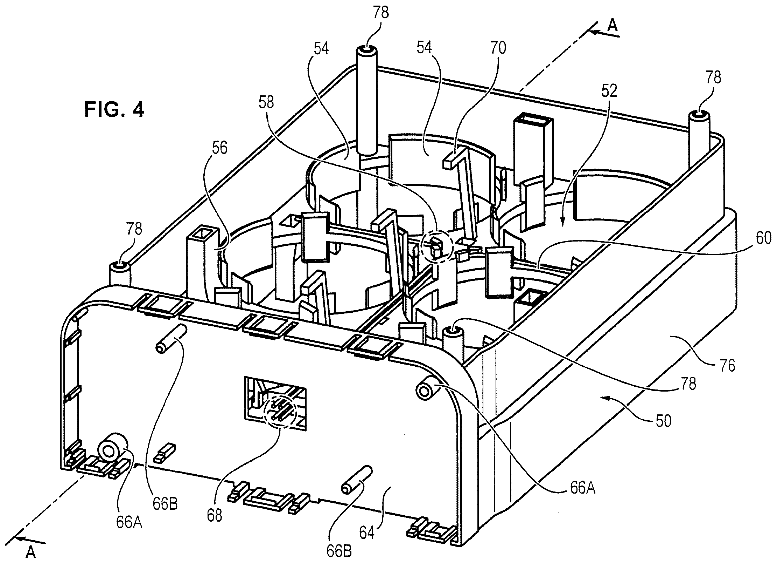

Le coeur de module 12 comprend également une structure de calage 50, plus visible sur la figure 4. Cette structure de calage 50 est réalisée en un matériau électriquement isolant, notamment en matière plastique, par moulage, ce qui permet de lui donner une forme complexe et d'intégrer de nombreuses fonctions sur cette structure.

La structure 50 comprend une pluralité de logements 52, chaque logement étant dimensionné pour accueillir un élément de stockage d'énergie 14. Chaque logement est d'ailleurs entouré d'un rebord 54 en plusieurs parties destiné à coopérer avec une paroi latérale du boîtier 14A et une extrémité libre du rebord 15 du couvercle 14B pour effectuer le centrage et le maintien en position selon la direction axiale de l'élément dans la structure.

Cette structure de calage 50 comprend également des saillies évidées 56 situées entre les logements 52. Ces saillies 56 sont configurées pour maintenir en position un connecteur électrique de type femelle (non visible), par exemple une cosse de type Faston^{®}. Un tel connecteur coopère avec un connecteur complémentaire, de type mâle, relié à une borne électrique d'un élément de stockage d'énergie. Dans le mode de réalisation décrit ici, ce connecteur complémentaire est une languette ménagée dans ou rapportée sur la barrette 40 de connexion, dans un plan essentiellement perpendiculaire au plan de la barrette et à la face d'extrémité des éléments 14 de stockage d'énergie. Une telle languette n'étant pas au coeur de l'invention, elle n'a pas été représentée sur les figures.

La structure de calage 50 comprend également des moyens de guidage de câbles, constitués par des paires de languettes 58 déformables élastiquement entre lesquelles on peut insérer les câbles 60 par clipsage. Ces câbles 60 sont généralement utilisés dans les modules de stockage d'énergie pour relier les éléments 14 à une carte électronique (visible sur la figure 1), apte à équilibrer la charge des différents éléments 14 du module. Ils sont notamment reliés à cette extrémité au connecteur placé dans la saillie 56 et à la carte électronique à l'autre extrémité comme on le décrira en détails ci-après.

La carte électronique est destinée à être positionnée verticalement, parallèlement à une face d'appui 64 de la structure de calage, située à une extrémité de celle-ci. La structure de calage 50 comprend d'ailleurs des moyens 66 de fixation de la carte électronique, constitués par deux fûts 66A à l'aide desquels la carte électronique peut être vissée sur la structure 50 et deux pions de centrage 66B permettant le positionnement de ladite carte électronique. Cette structure 50 comprend également un emplacement 68 pour fixer un connecteur électrique coopérant avec la carte électronique. Cet emplacement est ici un évidement réalisé dans la face d'appui 64 en regard de l'emplacement prévu pour la connexion sur la carte électronique. Le connecteur destiné à être placé dans l'évidement 68 est relié aux câbles 60 et enfiché dans la carte électronique.

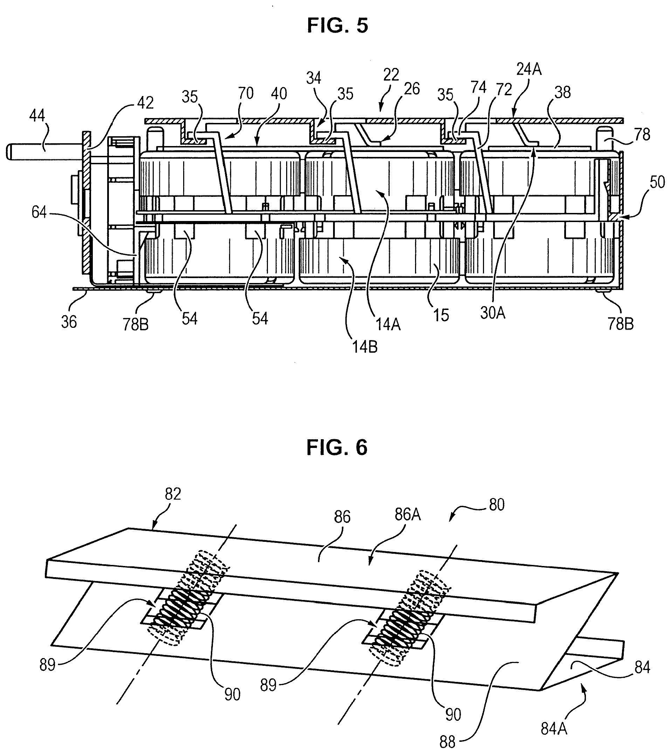

La structure de calage comprend également en partie centrale des nervures 70 en forme de crochet s'étendant vers le haut et destinées à coopérer avec la lame 35 liée aux ponts de matière 34 de l'organe 22, pour assurer le pré-montage du coeur de module, comme on le voit à la figure 5. Ces nervures comprennent chacune un bras 72 essentiellement vertical qui s'étend vers le haut pour dépasser les éléments une fois ces derniers insérés dans la structure de calage 50 et un rebord 74 à son extrémité libre, essentiellement horizontal. Comme cela est représenté à la figure 5, ce rebord 74 est destiné à coopérer avec la lame 35 formant une surface horizontale correspondante du pont de matière. La répartition des ponts de matière 34 (écartement, centrage) correspond donc à celle des nervures 70.

Lorsque les nervures 70 et la lame 35 coopèrent, et sont mécaniquement solidarisées, la hauteur de l'organe 22, à savoir la distance entre les première et deuxième faces de contact 24A - 30A est prédéterminée car l'organe est écrasé vers la structure de calage 50 sous l'action des nervures 70. La hauteur des nervures 70 et de la lame 35 sont choisies pour que les languettes 26 soient en position contrainte.

La structure de calage 50 comprend également, outre la face d'appui 64 destinée à porter la carte électronique, des parois latérales 76 s'étendant sur toute la hauteur des éléments lorsque ceux-ci sont insérés dans la structure, et qui longent la structure sur les trois autres côtés pour l'entourer, permettant ainsi d'isoler les éléments de stockage de l'enveloppe 16.

La structure de calage 50 comprend également des moyens de positionnement du tapis thermique 36, constitués par quatre plots 78B respectivement situés à chaque coin de la structure de calage 50 et destinés à coopérer avec des évidements correspondants 79 ménagés respectivement dans le tapis thermique 36. Ces plots 78B permettent de solidariser le tapis thermique 36 avec la structure 50 afin de les déplacer ensemble. Ils permettent également éventuellement de solidariser la structure 50 à une feuille isolante 38 si nécessaire.

On va maintenant décrire le procédé d'assemblage du module tel que décrit ci-dessus.

Lors d'une première étape, on monte toute la connectique (câbles 60, connecteurs, carte électronique, etc.) sur la structure de calage 50. Grâce à la présence de la structure de calage, cette opération peut en effet être effectuée avant que les éléments soient montés sur la structure et hors de la chaîne d'assemblage principale, ce qui permet un gain de temps conséquent.

On insère ensuite les éléments 14 dans les logements 52 prévus à cet effet de la structure de calage. Les éléments 14 étant destinés à être reliés en série à l'aide de barrettes, on dispose les éléments de sorte que la deuxième borne (couvercle 14B) d'un élément donné soit située dans un même plan que la première borne (fond du boîtier 14A) d'un élément adjacent. Comme on le voit sur la figure 5, les éléments sont donc placés tête-bêche dans la structure 50.

Ensuite, une fois les éléments 14 positionnés correctement, à l'aide des rebords 54, on place les barrettes 40, 42 sur les éléments, sur une face d'extrémité des éléments 14 et on soude ces barrettes aux faces d'extrémité correspondantes des éléments 14. On retourne ensuite le coeur du module 12 et on effectue la même opération de l'autre côté. On rapporte ensuite une languette sur chaque barrette de sorte que la languette soit insérée à son extrémité dans une cosse Faston^{®} 58 de la structure de calage. Cela permet de relier les éléments à la connectique de la structure de calage. On notera que la languette destinée à être insérée dans la cosse Faston^{®} peut être réalisée d'un seul tenant avec la barrette 40,42.

On place ensuite le coeur de module ainsi assemblé sur le tapis 36 et on met également en place la feuille 38 de matériau isolant sur la face supérieure du coeur de module 12. Ces deux pièces 36, 38 sont positionnés à l'aide des pions 78, 78B de la structure 50. On met ensuite l'organe 22 en place sur la feuille 38. Cet organe 22 est mis en place de sorte que les nervures 70 de la structure de calage coopèrent avec la lame 35 de l'organe. La hauteur des nervures 70 est choisie pour que la hauteur de l'assemblage ainsi créée soit inférieure à la hauteur disponible à l'intérieur de l'enveloppe 16, 116, notamment de la pièce 20, de sorte qu'on puisse facilement insérer l'assemblage dans l'enveloppe. Les languettes 26 sont alors positionnées chacune au droit d'un élément de stockage d'énergie 14 et sont contraintes, à savoir sont écrasées pour pouvoir obtenir cette configuration.

On notera que dans cette configuration, la position de l'organe 22 selon la direction longitudinale est décalée relativement à la structure de calage et que l'organe dépasse de la structure de calage au niveau de sa face opposée à la face d'appui 64.

On monte ensuite la face d'extrémité 18B sur le coeur de module, de sorte que les connecteurs 44 soient correctement placés relativement aux bornes 46 du module portées par cette paroi 18B.

On assemble également en parallèle sur la pièce 20 de l'enveloppe 16 la face d'extrémité 18A.

Une fois ces sous-ensembles constitués, on glisse le sous-ensemble comprenant le coeur de module dans la pièce 20 de l'enveloppe en insérant d'abord la face de la structure opposée à la face d'appui 64. Ainsi, l'organe 22 entre d'abord en contact avec la face d'extrémité 18A, avant la structure 50, puisqu'il est décalé par rapport à cette dernière. Comme l'organe 22 est maintenu dans une position contrainte par les nervures 70 de la structure de calage 50, il subsiste un jeu entre la face supérieure de l'organe et la face inférieure de la paroi supérieure 20A de l'enveloppe 16 et il n'est pas difficile de glisser l'organe 22 dans la pièce 20.

Une fois l'organe 22 en contact avec la paroi d'extrémité 18A, on continue de pousser le coeur de module vers la paroi 18A, et ce jusqu'à ce que la paroi d'extrémité 18B soit en butée contre l'extrémité correspondante de la pièce 20. Lors de cette étape, la structure 50 continue donc de glisser jusqu'à la paroi 18A alors que l'organe 22 reste statique relativement à cette paroi 18A. L'organe 22 étant solidarisé à la structure 50 par le biais des nervures 70, la structure 50 est libre d'effectuer une translation relativement à l'organe 22 vers la paroi 18A, les nervures 70 ne retenant pas l'organe 22 dans ce sens.

Ainsi, les nervures 70 effectuent une translation relativement aux lames 35 de l'organe jusqu'à se dégager complètement des lames 35. L'organe et notamment les languettes 26 ne sont donc plus contraintes par les nervures 70, une fois que le module a atteint sa configuration finale. Les languettes 26 retrouvent leur position initiale hors contrainte et la distance entre les faces de contact 24A et 30A augmente jusqu'à ce que la paroi principale 24 de l'organe 22 vienne en contact avec la paroi supérieure 20A de l'enveloppe.

On notera qu'il est particulièrement avantageux que l'organe 22 comprenne une pluralité de languettes 26 indépendantes les unes des autres. En effet, celles-ci peuvent être plus ou moins contraintes en fonction de l'élément 14 en face duquel elles se trouvent et ainsi rattraper les variations de hauteur existantes au niveau des éléments (tolérances de fabrication).

Une fois le coeur de module inséré dans l'enveloppe, il ne reste ensuite plus qu'à fixer la paroi d'extrémité 18B à la pièce 20 pour obtenir le module fini. On assure l'étanchéité entre ces différents éléments à l'aide de joints élastiques placés à l'interface de la pièce 20 et des parois d'extrémité 18A, 18B ou surmoulés sur l'un ou l'autre de ces éléments.

Le module fini permet une meilleure diffusion de la chaleur que les solutions connues de l'état de la technique, puisque la chaleur est diffusée par deux voies distinctes : par le biais du tapis thermique 36 et de la paroi inférieure 20B d'une part et par le biais de l'organe 22 et de la paroi supérieure 20A d'autre part. La chaleur est donc évacuée plus rapidement vers l'enveloppe 16 du module. En outre, l'enveloppe 16 présentant un contour fermé réalisé en une seule pièce 20, la chaleur est diffusée facilement (pas d'interface) aux parois latérales verticales depuis la paroi supérieure et/ou la paroi inférieure du module. La chaleur est alors mieux répartie dans le module et la surface d'échange avec l'air ou d'autres éléments de l'environnement du module (ici, par exemple un châssis du véhicule, placé au contact de la paroi inférieure du module) est donc plus importante. Cela permet également d'améliorer l'évacuation de la chaleur.

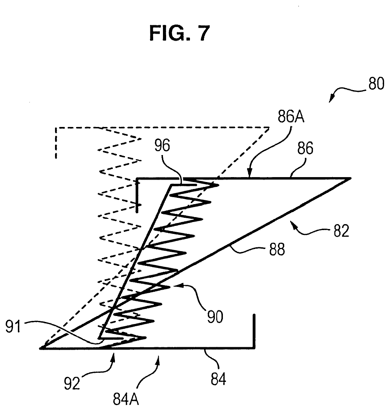

On va maintenant décrire en référence aux figures 6 et 7 une variante du mode de réalisation décrit précédemment. Dans ce mode de réalisation, on insère des longerons 80 (faisant office d'organes de mise en contact) dans la pièce 20 en lieu et place de l'organe 22 comprenant les languettes 26. Ces longerons s'étendent également essentiellement selon toute la dimension longitudinale de l'enveloppe et sont réalisés en métal. Les longerons 80 sont chacun placés au droit d'une rangée de trois éléments de stockage 14.

Comme on le voit, chaque longeron 80 comprend un profilé en Z 82, présentant une paroi d'appui 84 (inférieure dans le cas présent) sur une pluralité d'éléments et une paroi d'appui 86 (supérieure dans le cas présent) sur la paroi de référence 20A. Ces deux parois 84, 86 sont reliées par une paroi diagonale 88, qui permet au profilé d'acquérir une certaine élasticité dans la direction normale aux parois 84, 86 (également normale aux parois 20A, 20B lorsque le longeron 80 est placé dans la pièce20) puisque la hauteur du profilé peut être modifiée selon l'inclinaison de la paroi diagonale, comme on le voit d'ailleurs entre les positions représentées en trait plein et en trait pointillés sur la figure 7. Les parois d'appui 84, 86 définissent respectivement les première et deuxième faces de contact84A, 86A. Grâce à la configuration du longeron, la distance entre ces parois et faces de contact est variable.

Le profilé 82 comprend également dans sa paroi diagonale 88 une pluralité d'ouvertures 89 réparties symétriquement et régulièrement sur toute la longueur du profilé.

Dans chacune des ouvertures 89 est mis en place un ressort 90 dont une première extrémité est reliée à (s'appuie sur) la paroi supérieure 86 du profilé et une deuxième extrémité est reliée à (s'appuie sur) la paroi inférieure 84 de ce dernier.

Le ressort 90 est maintenu en position contrainte en compression, c'est-à-dire que sa longueur est inférieure à sa longueur au repos par une pince 92 comprenant deux branches 94, 96 attachées respectivement aux extrémités du ressort et ayant une longueur prédéterminée (correspondant à la longueur du ressort 90 à l'état contraint et donc inférieure à la longueur au repos du ressort), visibles sur la figure 7. On notera qu'alternativement les moyens de maintien pourraient comprendre une ou plusieurs languettes verticales reliant les parois 84, 86 du longeron 80, une telle languette étant cassable.

Lorsqu'on insère un longeron 80 dans la pièce 20, simultanément ou non au coeur de module 12, les ressorts 90 sont en position contrainte à l'aide des pinces 92, ce qui constitue la position d'assemblage du module, représentée en traits pleins sur la figure 7. Les longerons sont ainsi insérés facilement dans la pièce puisque la distance entre les parois 84, 86 est choisie pour qu'il existe un jeu entre la face supérieure 86A de la paroi d'appui 86 et la face inférieure de la paroi de référence 20A de l'enveloppe. Ensuite, on enlève les pinces 92 de sorte que les ressorts 90 tendent à revenir vers leur longueur au repos ce qui permet d'augmenter la hauteur de chaque longeron 80 de sorte que ce dernier vienne en butée contre la paroi supérieure 20A de l'enveloppe. La configuration correspondante du longeron 80 est représentée en traits pointillés sur la figure 7.

Un tel longeron permet de plaquer les éléments 14 contre la paroi 20B de dissipation thermique du module et ce quelles que soient les tolérances de fabrication des différents éléments (pièce 20, éléments 14). Toutefois, dans ce cas, on ne prend pas en compte au niveau du longeron la dispersion des dimensions des éléments puisqu'un unique longeron prend appui sur 3 éléments distincts.

On notera qu'on choisit la longueur au repos des ressorts 90 de sorte que les longerons 80 sollicités en extension par les ressorts 90, puissent plaquer les éléments 14 contre la paroi de dissipation 20B même si les éléments 14 ont leur taille minimale et la pièce 20 sa taille maximale compte tenu des jeux de fabrication. La longueur au repos des ressorts 90 est notamment supérieure à sa longueur lorsque le longeron 80 est en configuration de fonctionnement.

On notera également que les pinces 92 maintenant les ressorts 90 en position contrainte pourraient, comme on l'a présenté dans le mode de réalisation précédent, coopérer avec un élément solidaire d'un ou plusieurs éléments 14, notamment de la structure plastique 50, pour être désactivées automatiquement lors de l'assemblage. Une pointe solidaire de la structure plastique 50 (par exemple à l'extrémité d'une nervure telle que la nervure 70) pourrait venir percuter chaque pince 92 dans une zone de faiblesse de celle-ci lorsque la structure plastique 50 vient en butée contre la paroi 18A de l'enveloppe 16, afin de rompre ou de desserrer chaque pince 92.

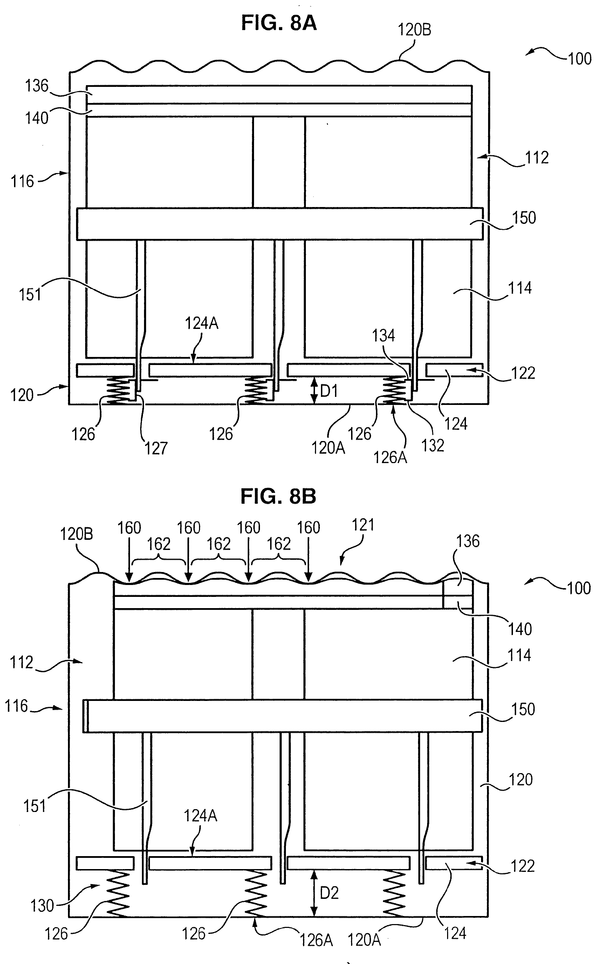

On a représenté encore un autre mode de réalisation d'un module selon l'invention aux figures 8A et 8B. Sur ces figures, on voit un module 100 en coupe pendant le montage du coeur de module 112 dans la pièce 120 puis le module suite à l'insertion du coeur de module dans la pièce 120.

Sur la figure 8A, on voit la pièce 120 en coupe, dans laquelle a été inséré un organe de mise en contact 122. Cet organe 122, cette fois situé sous le coeur de module, comprend une paroi principale 124 essentiellement plane et parallèle à la paroi de référence (ici la paroi inférieure de la pièce) et d'un seul tenant avec une pluralité de ressorts 126 précontraints par des pinces 127 les maintenant en compression, ces ressorts 126 étant situées entre la paroi principale 124 de l'organe et la paroi de référence 120A du module, correspondant à la paroi inférieure de la pièce 120. La face supérieure 124A de la paroi principale 124 forme une face de contact 124A destinée à être en contact avec les éléments 114 alors que les extrémités inférieures des différents ressorts 126 forment une autre face de contact 126A, destinée à être en contact avec la paroi de référence 120A de l'enveloppe. Du fait de la présence des ressorts 126, la distance entre les faces de contact 124A, 126A est bien entendu variable.

Les pinces 127 maintiennent les ressorts 126 en compression, entre deux branches 132, 134, à une longueur inférieure à leur longueur de repos, comme expliqué précédemment. Pour une meilleure tenue de chaque ressort 126, les branches 132, 134 de la pince 127 peuvent être conformées comme une fourche, le ressort étant placé entre deux dents de celle-ci. L'ensemble est conformé de sorte que la hauteur de l'organe 122 en configuration précontrainte, surmonté du coeur de module est inférieure à la hauteur disponible à l'intérieur de la pièce 120.

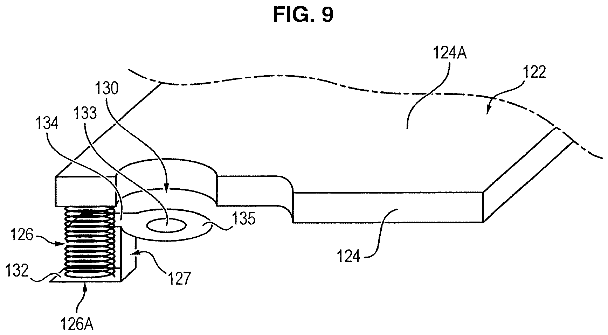

Sur la paroi principale 124, est placé le coeur de module comprenant les éléments 114, reliés par des barrettes de connexion 140, et recouverts du tapis thermique 136, les éléments étant également contenus dans la structure de calage 150. Comme on le remarque, la structure de calage comprend des fûts de positionnement 151 insérés dans des orifices 130 de la paroi de maintien, à savoir la paroi principale 124 de l'organe de mise en contact 122. Ces fûts rentrent aussi dans un orifice 133 de la pince 127 situé sur un bras 135 supplémentaire de celle-ci, dans le prolongement de la branche supérieure 134 mais ne servant pas à pincer les ressorts, comme on le voit mieux sur la figure 9, qui est une vue en coupe en perspective du détail de l'agencement de la paroi de maintien 124, d'une pince 127 et d'un ressort au niveau des orifices 130, 133.

Ensuite, comme on le voit sur la figure 8B, on pousse la structure vers l'extrémité droite (sur la figure) du module (l'organe de mise en contact 122 étant dans ce cas déjà mis en place dans le module). Les fûts 151 sont donc poussés vers l'extrémité droite de l'orifice 130 et entraînent avec eux la pince 127 (du fait de leur insertion dans l'orifice 133). Cela libère les ressorts 126 qui, du fait de leur position précontrainte, ont tendance à s'allonger, faisant passer la distance entre la paroi de référence 120A et la paroi principale 124 d'une distance D1 (sur la figure 8A) à une distance D2 supérieure à la distance D1 (sur la figure 8B). Cette distance D2 est la distance pour laquelle les éléments 114 sont en contact thermique, plus particulièrement le tapis thermique 136 est en contact, avec la paroi de dissipation thermique 120B, comme on le voit sur la figure 8B.

Comme on le voit également sur les figures 8A et 8B, cette paroi de dissipation thermique 120B peut être ondulée, contrairement à la paroi de dissipation thermique 20B du premier mode de réalisation. Ces ondulations 121 s'étendent sur toute la dimension longitudinale de la pièce 120 et sont suffisamment rapprochées pour que le tapis thermique 136 au droit de chaque élément 114 soit apte à être en contact avec la paroi 120B en plusieurs endroits. Ces ondulations 121 ont de préférence une hauteur qui ne dépasse pas 1 cm pour éviter d'augmenter le volume du module. Leur écartement est notamment inférieur à 2 cm. Leur présence sur la paroi supérieure est prévue pour ne pas endommager le tapis thermique 136.

En effet, en fonction des tolérances de fabrication de la pièce 120, et des éléments 114 notamment, la distance à atteindre pour que les éléments 114 soient en contact thermique avec la paroi 120B n'est pas toujours la même et le tapis thermique 136 n'est donc pas toujours compressé de la même façon. Ici, on permet que le tapis 136 soit en contact intime avec la paroi supérieure au niveau des lieux 160 de la paroi 120B les plus proches de la paroi 120A quelles que soient les tolérances de fabrication des différents éléments. Toutefois, lorsque le tapis 136 doit être très compressé, il est susceptible de s'endommager si sa limite de compressibilité est dépassée. On évite ce phénomène en ménageant des zones 162, entre les lieux de contact 160, dans lesquelles le tapis thermique 136 n'est pas autant compressé et peut même « amortir » la compression subie au niveau des lieux de contact.

On notera que les modes de réalisation précités ne décrivent pas l'invention de façon limitative. Cette dernière peut présenter de nombreuses variantes relativement à ce qui a été décrit, tout en restant dans le cadre des revendications. Par exemple :
- la paroi de référence peut être n'importe quelle paroi de la pièce 20. La pièce peut également comprendre plusieurs parois de référence ; la pièce peut par exemple comprendre deux parois de référence globalement orthogonales, afin de plaquer le module dans le coin opposé de l'enveloppe,
- le module peut ne pas être parallélépipédique,
- la forme de la paroi de dissipation thermique n'est pas limitée à ce qu'on a décrit. En outre, pour remplir la même fonction que celle remplie par les ondulations, on peut évider le tapis thermique par zones. On notera que configurer la paroi de dissipation thermique de sorte qu'elle présente des variations locales de hauteur semble ne pas être nécessaire lorsque l'organe de mise en contact comprend des moyens élastiques indépendants pour ajuster la distance entre la première face de contact et la seconde face de contact au droit de chaque élément,
- les parois latérales ne sont pas nécessairement d'un seul tenant,
- la pièce de l'enveloppe peut comprendre l'une des parois d'extrémité,
- l'organe de mise en contact est d'un seul tenant avec une paroi latérale de l'enveloppe ou la structure de calage,
- le nombre d'organes de mise en contact peut être différent de ce qui a été décrit. Le module pourrait par exemple comprendre un organe de mise en contact spécifique à chaque élément,
- l'organe de mise en contact peut être réalisé partiellement en un matériau thermiquement isolant,
- la forme des organes de mise en contact (section, etc.) n'est pas limitée à ce qu'on a décrit,
- un tapis thermique peut être introduit en remplacement ou en supplément de la feuille isolante 38 entre la paroi de maintien 24 et les éléments 14. Le module peut également ne comprendre aucun tapis thermique et/ou aucune feuille isolante (si l'organe de mise en contact n'est pas réalisé en un matériau électriquement conducteur) et/ou que l'enveloppe est réalisée en un matériau électriquement isolant et non en métal,
- la structure de calage est optionnelle. Sa forme et les fonctions qu'elle intègre ne sont pas limitées à ce qui a été décrit.

De même, concernant le procédé d'assemblage, les étapes peuvent varier en fonction des éléments présents ou pas dans le module. L'ordre des étapes n'est pas non plus limité à ce qui a été décrit. Par exemple, concernant un module tel que celui de la figure 1, la paroi d'extrémité 18B pourrait être fixée au coeur de module à la fin de l'assemblage, juste avant sa fixation à la pièce 20, ou alors avant que la carte électronique ne soit fixée sur la structure. La façon d'enlever les pinces ou les moyens de maintien peut également être différente de ce qui a été décrit ci-dessus.

## Revendications

1. Module (10 ; 100) de stockage d'énergie contenant une pluralité d'éléments (14 ; 114) de stockage d'énergie, le module comprenant :
- une enveloppe (16 ; 116) comprenant au moins une pluralité de parois latérales et deux parois d'extrémité (18A; 18B) dimensionnée pour entourer les éléments de stockage d'énergie,
- au moins un organe de mise en contact (22 ; 80; 122), destiné à être placé entre au moins un élément de stockage d'énergie et une paroi latérale du module, dite paroi de référence (20A; 120A), ledit organe comprenant une première face de contact (24A; 86A; 126A) et une deuxième face de contact (30A ; 84A ; 124A) associées respectivement avec la paroi de référence (20A; 120A) et ledit ou lesdits éléments de stockage d'énergie (14; 114), l'une au moins desdites première (24A; 86A; 126A) et deuxième faces (30A; 84A; 124A) de contact étant adaptée pour venir en butée contre l'un de la paroi de référence (20A ; 120A) ou dudit ou desdits éléments (14; 114), et ledit organe étant configuré de sorte que la distance entre les première et deuxième faces de contact puisse varier, ce module étant **caractérisé en ce qu'**il comprend un élément (22, 151) de commande de variation de cette distance, cet élément (22, 151) étant configuré de façon que ladite variation de distance entre les première et deuxième faces de l'organe de mise en contact (22 ; 80; 122) soit opérée automatiquement, lors de l'insertion dans l'enveloppe (16 ; 116), lorsque ledit élément (22 ; 151) de commande de variation de cette distance entre en contact avec une paroi de l'enveloppe (16 ; 116), et **en ce que** l'organe de mise en contact (22, 80, 122) est réalisé au moins partiellement en un matériau thermiquement conducteur.

2. Module (10 ; 100) de stockage d'énergie selon la revendication précédente, dans lequel ledit organe (22 ; 80; 122) comprend une première face de contact (24A ; 86A; 126A), une deuxième face de contact (30A; 84A; 124A) et au moins une composante élastiquement déformable (28 ; 88, 90 ; 126) entre la première face de contact (24A ; 86A ; 126A) et la deuxième face de contact (30A ; 84A ; 124A), la paroi de référence (20A; 120A) et ledit ou lesdits éléments (14; 114) étant adaptés pour solliciter respectivement la première face (24A; 86A; 126A) et la deuxième face (30A ; 84A ; 124A) de contact de sorte que la distance entre la première face de contact (24A ; 86A ; 126A et la deuxième face de contact (30A ; 84A; 124A) varie par déformation de la composante élastiquement déformable (28 ; 88, 90 ; 126).

3. Module (10 ; 100) de stockage d'énergie selon l'une des revendications précédentes, dans lequel les parois latérales de l'enveloppe sont réalisées en une seule pièce (20 ; 120) présentant un contour fermé et étant dimensionnée pour entourer les éléments de stockage d'énergie.

4. Module selon la revendication précédente, dans lequel la pièce comprend également une paroi d'extrémité d'un seul tenant avec les parois latérales.

5. Module selon la revendication 3, dans lequel la pièce (20) comprenant les parois latérales est ouverte à ses deux extrémités, le module comprenant en outre deux parois d'extrémité (18A-18B), chaque paroi étant indépendante respectivement de la pièce et apte à venir fermer celle-ci à une extrémité ouverte.

6. Module selon l'une quelconque des revendications précédentes, dans lequel le ou au moins l'un des organes de mise en contact (22) est configuré pour comprendre une pluralité de deuxièmes faces de contact (30A), chacune étant destinée à venir en butée contre un élément de stockage distinct (14), ledit ou lesdits organes étant configurés de sorte que les distances entre la première face de contact (24A) et chacune des deuxièmes faces de contact (30A) puissent être indépendantes les unes des autres.

7. Module selon l'une quelconque des revendications précédentes, dans lequel le ou au moins l'un des organes de mise en contact (22 ; 80; 122) est configuré pour pouvoir se déformer élastiquement au moins selon la direction normale aux faces de contact (24A, 30A; 84A, 86A; 124A, 126A).

8. Module selon la revendication précédente, dans lequel le ou au moins l'un des organes de mise en contact (22) comprend une paroi principale (24) formant la première ou la deuxième face de contact, et au moins une languette (26) comprenant un bras (28) incliné relativement à la paroi principale et, à l'extrémité du bras, une portion (30) formant la deuxième ou la première face de contact (30A).

9. Module selon la revendication précédente en combinaison avec la revendication 6, dans lequel le ou au moins l'un des organes de mise en contact (22) comprend une pluralité de languettes (26), chaque languette étant adapté pour être mise en place au droit d'un élément de stockage d'énergie (14).

10. Module selon l'une quelconque des revendications précédentes, dans lequel le ou au moins l'un des organes de mise en contact (22 ; 122) comprend des moyens de maintien (34; 92; 127) pour maintenir ledit organe dans une position contrainte.

11. Module selon la revendication précédente, dans lequel les moyens de maintien comprennent des moyens mécaniques (34 ; 127), tels qu'une ou plusieurs lames ou pinces, destinés à coopérer avec des moyens complémentaires (70 ; 151) solidaires d'au moins un élément de stockage (14 ; 114), afin d'activer ou de désactiver les moyens de maintien.

12. Module selon l'une quelconque des revendications précédentes, comprenant au moins un élément (36 ; 38 ; 136) électriquement isolant, destiné à être placé entre le ou au moins l'un des organes de mise en contact (22 ; 80; 122) et le ou au moins l'un des éléments de stockage (14 ; 114) et/ou entre le ou au moins l'un des éléments de stockage (14; 114) et une paroi latérale (20B ; 120B) de l'enveloppe (16 ; 116) opposée à la paroi de référence.

13. Module selon l'une quelconque des revendications précédentes, comprenant une seule paroi de référence (20A ; 120A) constituée par la paroi inférieure ou la paroi supérieure de l'enveloppe.

14. Module selon l'une quelconque des revendications précédentes, comprenant une structure de calage (50 ; 150) d'au moins deux éléments de stockage (14 ; 114), réalisée en un matériau isolant électriquement et comprenant une pluralité de logements (52) destinés chacun à accueillir un ou plusieurs éléments de stockage d'énergie.

15. Module selon la revendication précédente, dans lequel la structure de calage (50) comprend au moins l'un des moyens suivants :
- des moyens de coopération (70 ; 151) avec les moyens mécaniques (34 ; 133) du ou d'au moins l'un des organes de mise en contact (22 ; 122),
- des moyens (58) de guidage de câbles (60), et/ou
- des moyens (56) pour loger un connecteur électrique apte à coopérer avec des moyens complémentaires reliés aux éléments (14), et/ou
- des moyens (68) pour loger un connecteur à une carte électronique, et/ou
- des moyens (64) de fixation de la carte électronique, et/ou
- des moyens de fixation d'au moins un capteur.

16. Procédé d'assemblage d'un module (10 ; 100) de stockage d'énergie destiné à contenir une pluralité d'éléments de stockage d'énergie (14 ; 114) dans une enveloppe (16 ; 116), comprenant les étapes suivantes :
- insertion par glissement d'au moins un élément de stockage d'énergie (14 ; 114) et d'un organe de mise en contact (22 ; 80; 122) comprenant une première face de contact (24A ; 86A ; 126A) et une deuxième (30A ; 84A ; 124A) face de contact et configuré pour que la distance entre les première et deuxième faces de contact puisse varier, dans une pièce (20 ; 120) de l'enveloppe (16 ; 116) présentant un contour fermé et dimensionnée pour entourer l'élément de stockage d'énergie, l'insertion étant effectuée de sorte que la deuxième face de contact (30A ; 84A ; 124A) de l'organe vienne en butée contre le ou au moins l'un des éléments et que la distance entre les faces de contact soit égale à une première distance,
modification de la configuration de l'organe de mise en contact (22 ; 80; 122) de sorte que la distance entre les première et deuxième faces de contact soit égale à une deuxième distance supérieure à la première et que la première face de contact (24A ; 86A ; 126A) vienne en butée contre une paroi, dite de référence (20A ; 120A), de la pièce de l'enveloppe, **caractérisé en ce qu'**il comprend une étape de solidarisation dudit ou desdits éléments (14 ; 114) avec l'organe de mise en contact (22 ; 122) avant l'étape d'insertion, cette étape de solidarisation étant effectuée par coopération de moyens mécaniques (34, 35 ; 130) de l'organe avec des moyens complémentaires (70 ; 151) solidaires de l'élément de stockage, **en ce que** l'insertion des éléments et de l'organe dans l'enveloppe étant alors effectuée simultanément, et **en ce que** l'étape de modification de la configuration est effectuée par libération de la coopération entre les moyens mécaniques et les moyens complémentaires.

17. Procédé selon la revendication 16, comprenant une étape d'insertion d'au moins deux éléments de stockage (14 ; 114) dans une structure de calage (50 ; 150) comprenant une pluralité de logements (52) adaptés respectivement pour accueillir au moins l'un des éléments de stockage, préalablement à l'étape d'insertion et/ou de solidarisation de l'élément de stockage et de l'organe de mise en contact (22 ; 122).

## Patentansprüche

1. Energiespeichermodul (10; 100), das mehrere Energiespeicherelemente (14; 114) enthält, wobei das Modul Folgendes umfasst:
- ein Gehäuse (16; 116), das mindestens mehrere Seitenwände und zwei Endwände (18A; 18B) umfasst und bemessen ist, um die Energiespeicherelemente zu umgeben,
- mindestens ein Inkontaktbringungsorgan (22; 80; 122), das dazu bestimmt ist, zwischen mindestens einem Energiespeicherelement und einer Seitenwand des Moduls platziert zu werden, die Bezugswand (20A; 120A) genannt wird, wobei das Organ eine erste Kontaktfläche (24A; 86A; 126A) und eine zweite Kontaktfläche (30A; 84A; 124A) umfasst, die jeweils der Bezugswand (20A; 120A) und dem oder den Energiespeicherelement/en (14; 114) zugehörig sind, wobei mindestens eine von der ersten (24A; 86A; 126A) und der zweiten Kontaktfläche (30A; 84A, 124A) angepasst ist, um gegen eines von der Bezugswand (20A; 120A) oder dem oder den Elementen (14; 114) in Anschlag zu gelangen, und das Organ ausgestaltet ist, so dass der Abstand zwischen der ersten und der zweiten Kontaktfläche variieren kann, wobei dieses Modul **dadurch gekennzeichnet ist, dass** es ein Element (22, 151) zur Steuerung des Variierens dieses Abstands umfasst, wobei dieses Element (22, 151) ausgestaltet ist, so dass das Variieren des Abstands zwischen der ersten und der zweiten Fläche des Inkontaktbringungsorgans (22; 80; 122) automatisch bei der Einführung in das Gehäuse (16; 116) betätigt wird, wenn das Element (22; 151) zur Steuerung des Variierens dieses Abstands mit einer Wand des Gehäuses (16; 116) in Kontakt gelangt, und dadurch, dass das Inkontaktbringungsorgan (22, 80, 122) zumindest teilweise aus einem wärmeleitfähigen Material ausgeführt ist.

2. Energiespeichermodul (10; 100) nach dem vorhergehenden Anspruch, wobei das Organ (22; 80; 122) eine erste Kontaktfläche (24A; 86A; 126A), eine zweite Kontaktfläche (30A; 84A; 124A) und mindestens ein elastisch verformbares Bauelement (28; 88, 90; 126) zwischen der ersten Kontaktfläche (24A; 86A; 126A) und der zweiten Kontaktfläche (30A; 84A; 124A) umfasst, wobei die Bezugswand (20A; 120A) und das oder die Elemente (14; 114) angepasst sind, um jeweils die erste Kontaktfläche (24A; 86A; 126A) und die zweite Kontaktfläche (30A; 84A; 124A) vorzuspannen, so dass der Abstand zwischen der ersten Kontaktfläche (24A; 86A; 126A) und der zweiten Kontaktfläche (30A; 84A; 124A) durch Verformung des elastisch verformbaren Bauelements (28; 88, 90; 126) variiert.

3. Energiespeichermodul (10; 100) nach einem der vorhergehenden Ansprüche, wobei die Seitenwände des Gehäuses aus einem Stück (20; 120) ausgeführt sind, das einen geschlossenen Umriss aufweist und bemessen ist, um die Energiespeicherelemente zu umgeben.

4. Modul nach dem vorhergehenden Anspruch, wobei das Teil auch eine Endwand umfasst, die einstückig mit den Seitenwänden ist.

5. Modul nach Anspruch 3, wobei das Teil (20), das die Seitenwände umfasst, an seinen zwei Enden offen ist, wobei das Modul ferner zwei Endwände (18A-18B) umfasst, wobei jede Wand jeweils von dem Teil unabhängig ist und geeignet ist, dieses an einem offenen Ende zu schließen.

6. Modul nach einem der vorhergehenden Ansprüche, wobei das oder mindestens eines der Inkontaktbringungsorgane (22) ausgestaltet ist, um mehrere zweite Kontaktflächen (30A) zu umfassen, wobei jede dazu bestimmt ist, gegen ein getrenntes Speicherelement (14) in Anschlag zu gelangen, wobei das oder die Organe ausgestaltet ist/sind, so dass die Abstände zwischen der ersten Kontaktfläche (24A) und jeder der zweiten Kontaktflächen (30A) unabhängig voneinander sein können.

7. Modul nach einem der vorhergehenden Ansprüche, wobei das oder mindestens eines von den Inkontaktbringungsorganen (22; 80; 122) ausgestaltet ist, um sich gemäß mindestens der Richtung normal zu den Kontaktflächen (24A, 30A; 84A, 86A; 124A, 126A) elastisch verformen zu können.

8. Modul nach dem vorhergehenden Anspruch, wobei das oder mindestens eines von den Inkontaktbringungsorganen (22) eine Hauptwand (24), die die erste oder die zweite Kontaktfläche bildet, und mindestens eine Feder (26) umfasst, die einen Arm (28), der in Bezug zur Hauptwand geneigt ist, und, am Ende des Arms, einen Abschnitt (30) umfasst, der die zweite oder die erste Kontaktfläche (30A) bildet.

9. Modul nach dem vorhergehenden Anspruch in Kombination mit Anspruch 6, wobei das oder mindestens eines von den Inkontaktbringungsorganen (22) mehrere Federn (26) umfasst, wobei jede Feder angepasst ist, um senkrecht zu einem Energiespeicherelement (14) eingerichtet zu werden.

10. Modul nach einem der vorhergehenden Ansprüche, wobei das oder mindestens eines von den Inkontaktbringungsorganen (22; 122) Haltemittel (34; 92; 127) zum Halten des Organs in einer auf Spannung beanspruchten Stellung umfasst.

11. Modul nach dem vorhergehenden Anspruch, wobei die Haltemittel mechanische Mittel (34; 127), wie beispielsweise ein/e oder mehrere Blätter oder Klemmen, umfassen, die dazu bestimmt sind, mit ergänzenden Mitteln (70; 151) zusammenzuwirken, die fest mit mindestens einem Speicherelement (14; 114) verbunden sind, um die Haltemittel zu aktivieren oder zu deaktivieren.

12. Modul nach einem der vorhergehenden Ansprüche, das mindestens ein elektrisch isolierendes Element (36; 38; 136) umfasst, das dazu bestimmt ist, zwischen dem oder mindestens einem von den Inkontaktbringungsorganen (22; 80; 122) und dem oder mindestens einem von den Speicherelementen (14; 114) und/oder zwischen dem oder mindestens einem von den Speicherelementen (14; 114) und einer Seitenwand (20B; 120B) des Gehäuses (16; 116), die der Bezugswand entgegengesetzt ist, platziert zu werden.

13. Modul nach einem der vorhergehenden Ansprüche, das eine einzige Bezugswand (20A; 120A) umfasst, die aus der unteren Wand oder der oberen Wand des Gehäuses besteht.

14. Modul nach einem der vorhergehenden Ansprüche, das eine Struktur zur Verkeilung (50; 150) von mindestens zwei Speicherelementen (14; 114) umfasst, das aus einem elektrisch isolierenden Material ausgeführt ist und mehrere Aufnahmen (52) umfasst, die jeweils dazu bestimmt sind, ein oder mehrere Energiespeicherelemente aufzunehmen.

15. Modul nach dem vorhergehenden Anspruch, wobei die Verkeilungsstruktur (50) mindestens eines von den folgenden Mitteln umfasst:
- Mittel zum Zusammenwirken (70; 151) mit den mechanischen Mitteln (34; 133) von dem oder von mindestens einem von den Inkontaktbringungsorganen (22; 122),
- Mittel (58) zur Führung von Kabeln (60), und/oder
- Mittel (56) zum Unterbringen eines elektrischen Verbinders, der geeignet ist, mit ergänzenden Mitteln zusammenzuwirken, die mit den Elementen (14) verbunden sind, und/oder
- Mittel (68) zum Unterbringen eines Verbinders mit einer elektronischen Karte und/oder
- Mittel (64) zur Befestigung der elektronischen Karte und/oder
- Mittel zur Befestigung von mindestens einem Sensor.

16. Verfahren zum Zusammenbauen eines Energiespeichermoduls (10; 100), das dazu bestimmt ist, mehrere Energiespeicherelemente (14; 114) in einem Gehäuse (16; 116) zu enthalten, das die folgenden Schritte umfasst:
- Einführen durch Gleiten von mindestens einem Energiespeicherelement (14; 114) und einem Inkontaktbringungsorgan (22; 80; 122), das eine erste Kontaktfläche (24A; 86A; 126A) und eine zweite Kontaktfläche (30A; 84A; 124A) umfasst und ausgestaltet ist, damit der Abstand zwischen der ersten und der zweiten Kontaktfläche variieren kann, in einem Teil (20; 120) des Gehäuses (16; 116), der einen Umriss umfasst, der geschlossen und bemessen ist, um das Energiespeicherelement zu umgeben, wobei das Einführen durchgeführt wird, so dass die zweite Kontaktfläche (30A; 84A; 124A) des Organs gegen das oder mindestens eines von den Elementen in Anschlag gelangt und dass der Abstand zwischen den Kontaktflächen gleich einem ersten Abstand ist,
- Änderung der Ausgestaltung des Inkontaktbringungsorgans (22; 80; 122), so dass der Abstand zwischen der ersten und der zweiten Kontaktfläche gleich einem zweiten Abstand ist, der größer als der erste ist, und dass die erste Kontaktfläche (24A; 86A; 126A) gegen eine Wand, eine sogenannte Bezugswand (20A; 120A), des Teils des Gehäuses in Anschlag gelangt, **dadurch gekennzeichnet, dass** es einen Schritt zur festen Befestigung des oder der Elemente (14; 114) mit dem Inkontaktbringungsorgan (22; 122) vor dem Schritt des Einführens umfasst, wobei dieser Schritt der festen Befestigung durch Zusammenwirken von mechanischen Mitteln (34, 35; 130) des Organs mit ergänzenden Mitteln (70; 151) durchgeführt wird, die fest mit dem Speicherelement verbunden sind, und dadurch, dass das Einführen der Elemente und des Organs in das Gehäuse dann gleichzeitig durchgeführt wird, und dadurch, dass der Schritt der Abwandlung der Ausgestaltung durch Befreiung des Zusammenwirkens zwischen den mechanischen Mitteln und den ergänzenden Mitteln durchgeführt wird.

17. Verfahren nach Anspruch 16, das einen Schritt zum Einführen von mindestens zwei Speicherelementen (14; 114) in eine Verkeilungsstruktur (50; 150) umfasst, die mehrere Aufnahmen (52) umfasst, die jeweils angepasst sind, um mindestens eines von den Speicherelementen vor dem Schritt zum Einführen und/oder zur festen Befestigung des Speicherelements und des Inkontaktbringungsorgans (22; 122) aufzunehmen.

## Claims

1. A power storage module (10; 100) containing a plurality of power storage elements (14; 114), the module comprising:
- an envelope (16; 116) comprising at least a plurality of lateral walls and two end walls (18A; 18B) sized to enclose the power storage elements,
- at least one contacting member (22; 80; 122) intended to be placed between at least one power storage element and a lateral wall of the module, called reference wall (20A; 120A), said member comprising a first contact face (24A; 86A; 126A) and a second contact face (30A; 84A; 124A) associated respectively to the reference wall (20A; 120A) and said power storage element(s) (14; 114), one at least of said first (24A; 86A; 126A) and second contact faces (30A; 84A; 124A) being adapted to abut against one of the reference wall (20A; 120A) or of said element(s) (14; 114), and said member being configured such that the distance between the first and second contact faces can vary, this module being **characterized in that** it comprises an element (22, 151) controlling variation of this distance, this element (22, 251) being configured such that said variation of distance between the first and second faces of the contacting member (22, 80, 122) is operated automatically, during the insertion in the envelope (16, 116), when said element (22, 151) for controlling variation of this distance makes contact with a wall of the envelope (16, 116) and **in that** the contacting member (22, 80, 122) is made at least partially of thermally conductive material.

2. The power storage module (10; 100) according to the preceding claim, wherein said member (22; 80; 122) comprises a first contact face (24A; 86A; 126A), a second contact face (30A; 84A; 124A) and at least one elastically deformable component (28; 88, 90; 126) between the first contact face (24A; 86A; 126A) and the second contact face (30A; 84A; 124A), the reference wall (20A; 120A) and said element (s) (14; 114) being adapted to stress respectively the first contact face (24A; 86A; 126A) and the second contact face (30A; 84A; 124A) such that the distance between the first contact face (24A; 86A; 126A) and the second contact face (30A; 84A; 124A) varies by deformation of the elastically deformable component (28; 88, 90; 126).

3. The power storage module (10; 100) according to any one of the preceding claims, wherein the lateral walls of the envelope are made in a single piece (20; 120) having a closed outline and being sized to enclose the power storage elements.

4. The module according to the preceding claim, wherein the piece also comprises an end wall in a single piece with the lateral walls.

5. The module according to Claim 3, wherein the piece (20) comprising the lateral walls is open at its two ends, the module further comprising two end walls (18A-18B), each wall being independent respectively of the piece and capable of closing the latter at an open end.

6. The module according to any one of the preceding claims, wherein the or at least one of the contacting members (22) is configured to comprise a plurality of second contact faces (30A), each being intended to abut against a separate storage element (14), said member (s) being configured such that the distances between the first contact face (24A) and each of the second contact faces (30A) can be independent of each other.

7. The module according to any one of the preceding claims, wherein the or at least one of the contacting members (22; 80; 122) is configured to be able to deform elastically at least in the normal direction to the contact faces (24A, 30A; 84A, 86A; 124A, 126A).

8. The module according to the preceding claim, wherein the or at least one of the contacting members (22) comprises a main wall (24) forming the first or the second contact face, and at least one tab (26) comprising an arm (28) inclined relative to the main wall and, at the end of the arm, a portion (30) forming the second or the first contact face (30A).

9. The module according to the preceding claim in combination with Claim 6, wherein the or at least one of the contacting members (22) comprises a plurality of tabs (26), each tab being adapted to be placed at right of a power storage element (14).

10. The module according to any one of the preceding claims, wherein the or at least one of the contacting members (22; 122) comprises holding means (34; 92; 127) for holding said member in a stressed position.

11. The module according to the preceding claim, wherein the holding means comprise mechanical means (34; 127), such as one or more blades or pliers, intended to cooperate with complementary means (70; 151) attached to at least one storage element (14; 114) to activate or deactivate the holding means.

12. The module according to any one of the preceding claims, comprising at least one element (36; 38; 136) electrically insulating, intended to be placed between the or at least one of the contacting members (22; 80; 122) and the or at least one of the storage elements (14; 114) and/or between the or at least one of the storage elements (14; 114) and a lateral wall (20B; 120B) of the envelope (16; 116) opposite the reference wall.

13. The module according to any one of the preceding claims, comprising a single reference wall (20A; 120A) constituted by the lower wall or the upper wall of the envelope.

14. The module according to any one of the preceding claims, comprising a shimming structure (50; 150) of at least two storage elements (14; 114), made of electrically insulating material and comprising a plurality of housings (52) each intended to receive one or more power storage elements.

15. The module according to the preceding claim, wherein the shimming structure (50) comprises at least one of the following means:
- cooperation means (70; 151) with the mechanical means (34; 133) of the or of at least one of the contacting members (22; 122),
- guide means (58) of cables (60), and/or
- means (56) for housing an electric connector capable of cooperating with complementary means connected to the elements (14), and/or
- means (68) for housing a connector on an electronic card, and/or
- means (64) for fastening the electronic card, and/or
- fastening means of at least one sensor.

16. An assembly method of a power storage module (10; 100) intended to contain a plurality of power storage elements (14; 114) in an envelope (16; 116), comprising the following steps:
- insertion by sliding of at least one power storage element (14; 114) and one contacting member (22; 80; 122) comprising a first contact face (24A; 86A; 126A) and a second (30A; 84A; 124A) contact face and configured so that the distance between the first and second contact faces can vary, in a piece (20; 120) of the envelope (16; 116) having a closed outline and sized to enclose the power storage element, insertion being done such that the second contact face (30A; 84A; 124A) of the member abuts against the or at least one of the elements and the distance between the contact faces is equal to a first distance,
- modification of the configuration of the contacting member (22; 80; 122) such that the distance between the first and second contact faces is equal to a second distance greater than the first and the first contact face (24A; 86A; 126A) abuts against a wall, called reference (20A; 120A), of the piece of the envelope, **characterized in that** it comprises a connection step of said element(s) (14; 114) with the contacting member (22; 122) prior to the insertion step, this connection step being completed by cooperation of mechanical means (34, 35; 130) of the member with complementary means (70; 151) attached to the storage element, **in that** insertion of the elements and of the member in the envelope are performed simultaneously, and **in that** the modification step of the configuration is effected by release of cooperation between the mechanical means and the complementary means.

17. The method according to claim 16, comprising an insertion step of at least two storage elements (14; 114) in a shimming structure (50; 150) comprising a plurality of housings (52) adapted respectively to receive at least one of the storage elements, prior to the insertion and/or connection step of the storage element and of the contacting member (22; 122).
